**Europäisches Patentamt**

(19) **European Patent Office**

**Office européen des brevets**

(11) Veröffentlichungsnummer: **0 103 076**
**B1**

(12) # EUROPÄISCHE PATENTSCHRIFT

(45) Veröffentlichungstag der Patentschrift:
**08.04.87**

(21) Anmeldenummer: **83105744.3**

(22) Anmeldetag: **11.06.83**

(51) Int. Cl.⁴: **H 04 N 7/00**, H 04 J 3/02

(54) **System zur digitalen Übertragung von Video- bzw. Bildfernsprechsignalen.**

(30) Priorität: **20.08.82 DE 3230943**

(43) Veröffentlichungstag der Anmeldung:
**21.03.84 Patentblatt 84/12**

(45) Bekanntmachung des Hinweises auf die Patenterteilung:
**08.04.87 Patentblatt 87/15**

(84) Benannte Vertragsstaaten:
**AT BE CH FR GB IT LI LU NL SE**

(56) Entgegenhaltungen:
**DE-A-3 010 702**
**DE-B-2 539 805**
**US-A-3 987 248**

**ELEKTRISCHES NACHRICHTENWESEN, Bd. 57, Nr. 3, 1983, Stuttgart A. BARBETTA, M. NATENS "Digital-Multiplexer für Übertragungsgeschwindigkeiten von 2 bis 565 Mbit/s", Seiten 251-258 ELEKTRISCHES NACHRICHTENWESEN, Bd. 49, Nr. 3, 1974, Stuttgart J.D. WESTON "Digitale Fernsehübertragung für den europäischen Nachrichtensatelliten" Seiten 334-342 NACHRICHTEN ELEKTRONIK, Nr. 5, 1980, Heidelberg HAGEN HOFMEISTER "Digitale Übertragungstechnik" Seiten 160-164**

(73) Patentinhaber: **ANT Nachrichtentechnik GmbH, Gerberstrasse 33, D-7150 Backnang (DE)**

(72) Erfinder: **de Sanctis, Massimo, Dot.Ing., Hohenstaufenstrasse 9, D-7153 Weissach im Tal (DE)**
Erfinder: **Schmidt, Wolfgang, Dr- Ing., Beinsteiner Strasse 59, D-7056 Weinstadt (DE)**

(74) Vertreter: **Schickle, Gerhard, Dipl.- Ing., ANT Nachrichtentechnik GmbH Patent- und Lizenzabteilung Gerberstrasse 33, D-7150 Backnang (DE)**

## Beschreibung

Die Erfindung betrifft ein System zur digitalen Übertragung von Video- bzw. Bildfernsprechsignalen gemäß Oberbegriff des Patentanspruchs 1

In der eigenen älteren nationalen Anmeldung DE-A-32 27 780 (Veröffentlichungstag 26.1.1984) wurde ein System zur digitalen Übertragung von Video- bzw. Bildfernsprechsignalen mit der Bitrate eines PCM-Quartärsystems vorgeschlagen, das es ermöglicht, in unaufwendiger Weise außer den Video- bzw. BiFe-Signalen zusätzliche Tonkanäle, einen Signalisierungskanal oder andere Signale für 64 kBit/s-Raster in modularer bzw. nachprüfbarer Bauweise zu übertragen, und es wurde ein Synchronmultiplexer auf der Sendeseite und ein entsprechender Demultiplexer auf der Empfangsseite beschrieben.

In den deutschen Schriften DE-B2- 2 539 805 und DE-A1-3 010 702 sind eine Schaltungsordnung zur Durchschaltung von Zeitmultiplex-Signalen bzw. ein digitales Nachrichtenübermittelungssystem beschrieben, die einfache Rahmen für PCM-Übertragung mit 20 bzw. 32 Zeitschlitzen zu 10/11 Bit verwenden. Solche Rahmen sind für Video- oder Bildfernsprechsignalübertragung ungeeignet, und es können auch keine Hinweise für Länge und Struktur eines Rahmens für PCM-Quartärsysteme mit der Bitrate von 135 MBit/s entnommen werden.

Der vorliegenden Anmeldung lag die Aufgabe zugrunde, für diesen synchronen Multiplexer bzw. Demultiplexer einen optimalen unaufwendigen Rahmenaufbau mit einer geeigneten Zeitschlitzlänge anzugeben.

Die Lösung erfolgt mit den im Patentanspruch 1 angegebenen Mitteln.

Durch den erfindungsgemäßen Multiplexrahmen mit 10-Bit-Zeitschlitzen ergeben sich die Vorteile einer Geschwindigkeitsuntersuchung um den Faktor 10 gegenüber einem 1-Bit-Zeitschlitz und daß bei der ülichen geschlossenen Codierung der Videoinformation keine zusätzliche Synchronisationsinformation für den Digital-Analog-Wandler benötigt wird.

Weitere Vorteile ergeben sich durch optimale Ausgestaltungen der Erfindung gemäß der Unteransprüche. Durch den matrixförmigen Aufbau des Multiplexrahmens in 32 Zeilen und 68 Spalten ergibt sich der Vorteil, daß jede Spalte einen transparenten 2-MBit/s-Kanal darstellt.

Dadurch, daß zur Synchronisation äquidistant im Rahmen verteilte jeweils ein Sync-Wort enthaltende 10-Bit-Zeitschlitze vorgesehen sind, ergibt sich eine effektivere Synchronisation gegenüber 1-Bit-Synchronisationszeitschlitzen.

Durch die Zuordnung einer ersten Spalte für Synchronisations- und Signalisierungszwecke, Stereotonkanäle und andere Zwecke sowie durch Zuordnung einer zweiten Spalte, die einen äquidistanten Abstand zur ersten Spalte von 33 Spalten aufweist, zu einem transparenten PCM-30-Kanal, ergibt sich für die Videoinformation die in den 33 jeweils dazwischenliegenden Spalten enthalten ist, ein optimal kleiner Speicher.

Durch die günstige Wahl der Bitfolge 111000100 für das Rahmensynchronisationswort ergibt sich eine sehr schnelle Synchronisation, weil diese Sequenz einschließlich ihrer invertierten Version gute Autokorrelationseigenschaften aufweisen, die sich dadurch auszeichnen, daß bei Bitverschiebungen nur kleine Übereinstimmungswahrscheinlichkeiten mit der übrigen Information sich ergeben. Durch die inverse Wahl des zweiten Synchronisationswortes ergibt sich außerdem ein Synchronisationskomparator mit fast identischer Realisierung.

Es folgt nun die Beschreibung der Erfindung anhand der Figuren.

Die Fig. 1 zeigt ein Ausführungsbeispiel für einen erfindungsgemäßen Multiplexrahmen mit Zeitschlitzzuordnung.

Die Fig. 2 und 3 stellen jeweils ein Blockschaltbild für eine optimale Grundausführung eines Multiplexers bzw. Demuliplexers dar.

Die Fig. 4 schließlich zeigt ein Ablaufdiagramm für einen von mehreren möglichen Algorithmen für die Rahmensynchronisation.

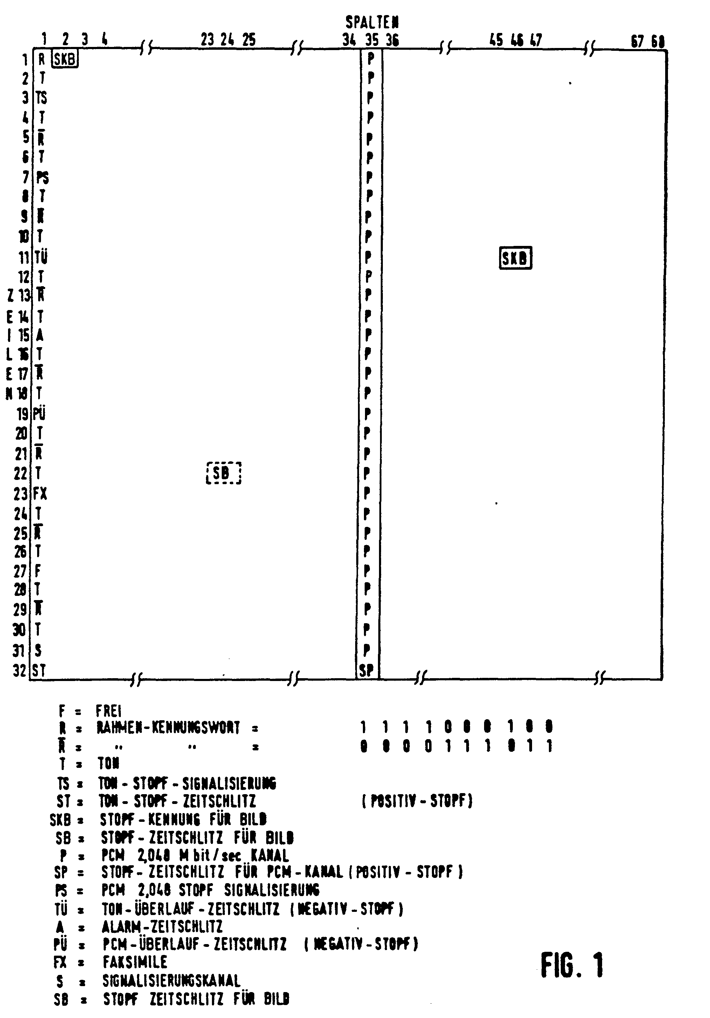

In Fig. 1 ist der matrixförmige Aufbau des Rahmens mit 68 Spalten und 32 Zeilen erkennbar. Die Spalten 2 bis 34 und Spalten 36 bis 68 sind für die Übertragung von Videoinformation vorgesehen, die Spalte 1 für die Übertragung der Rahmensynchronisation (Stereo)Tonkanälen Signalisierungs- und sonstige Zwecke und die Spalte 35 für einen transparenten 2048 kBit/s-Kanal z.B. PCM-30- oder 2 x Stereotonkanäle. In Spalte 1 ist das Rahmenkennungswort in jeder vierten Zeile, beginnend bei Zeile 1, untergebracht, wobei in Zeile 1 das Rahmenkennungswort R = 1111000100 und in den übrigen der genannten Zeilen die invertierte Information R̄ untergebracht ist. In den geradzahligen Zeilen wird ein 1024-kBit/s-Stereotonkanal T übertragen, wobei in der letzten Zeile ein Tonstopfzeitschlitz ST untergebracht ist im Falle eines Positivstopfens. Die Tonstopfsignalisierung TS erfolgt in der dritten Zeile. Im Falle des negativen Stopfens für Ton ist der erste Zeitschlitz der elften Zeile vorgesehen (TÜ). Mit dieser angegebenen Zuordnung sind maximale Abweichungen von Tonbitraten zu 6 $10^{-2}$ zugelassen. In Zeile 7 erfolgt die Signalisierung für das Stopfen PS für einen 2,048-Mbit/sec-Kanal, beispielsweise PCM-30, wie er in der Spalte 35 (P) vorgesehen ist. Im Falle des Negativstopfens wird in der neunzehnten Zeile der ersten Spalte der Überlauf PÜ übertragen, und im Falle des positiven Stopfens dient der letzte Zeitschlitz der Zeile 35 (SP). Für die Überwachung A ist ein Zeitschlitz in der fünfzehnten Zeile der ersten Spalte vorgesehen, und in der dreiundzwanzigsten Zeile dieser ersten Spalte ist ein Zeitschlitz für beispielsweise Faksimileübertragung FX vorgesehen. Im siebenundzwanzigsten Zeitschlitz der Spalte 1 steht ein 64-kbit/sec-Kanal F frei zur Verfügung, und im einunddreißigsten Zeitschlitz dieser ersten Spalte wird die Signalisierung S für die Bildfernsprechzeichengabe übertragen.

Wie oben schon angedeutet, wird in den restlichen Spalten die Video- bzw. BiFe-Information übertragen, wobei zur Verminderung der Auswirkung von Burstfehlern die Bildstopfsignalisierung SKB in zwei weit voneinander entfernten Zeitschlitzen im Rahmen untergebracht ist. Zusammen mit der eigentlichen Stopfinformation, die in der zweiundzwanzigsten Zeile der vierundzwanzigsten Spalte untergebracht ist (SB), sind die Stopfkennungszeitschlitze äquidistant im Rahmen verteilt.

Selbstverständlich kann auch, falls Kompatibilität mit dem PCM-Rahmenkennungswort erwünscht ist, dieses im 1. Zeitschlitz und im 1. Teil des 2. Zeitschlitzes übertragen werden.

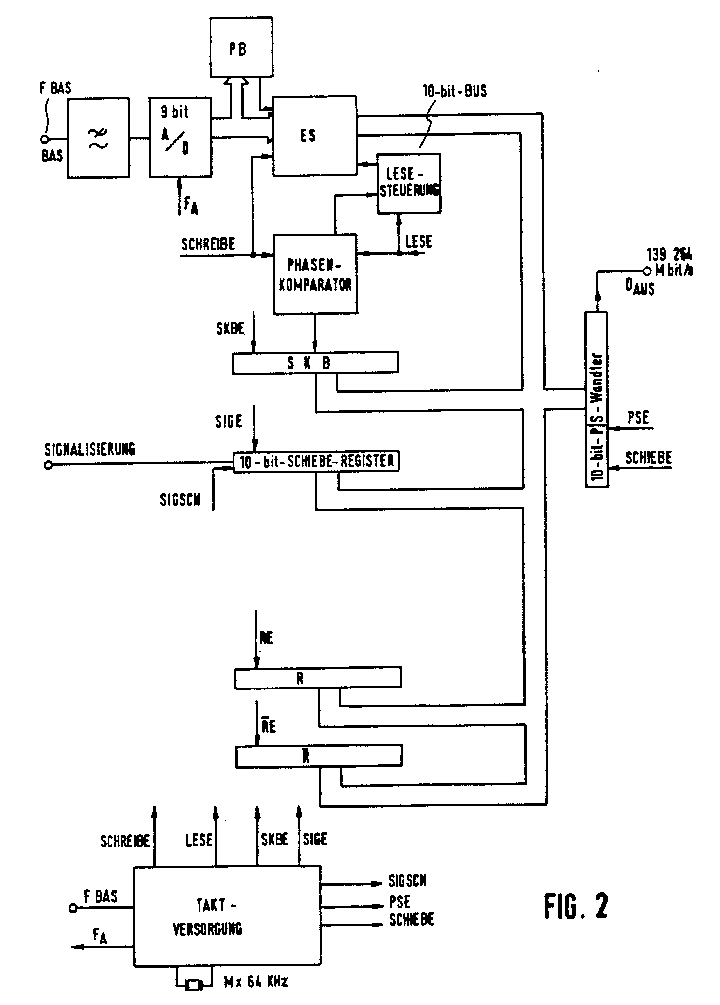

Die Fig. 2 zeigt ein Blockschaltbild für eine optimale Grundausführung eines Multiplexers zur Übertragung von Bildinformation und zugehöriger Zeichengabe. Es ist ein 10-Bit-Bus erkennbar, an den eingangsseitig ein elastischer Speicher ES, ein 10-Bit-Schieberegister zur Aufnahme von Signalisierungsinformation, zwei Register zur Abgabe eines ersten Synchronisationswortes R bzw. eines zweiten inversen Synchronisationswortes R̄ jeweils über Tristate-Register angeschlossen sind. Ausgangsseitig ist ein 10-Bit-Parallelserienwandler angeschlossen, an dessen seriellem Ausgang der Multiplex-Bitstrom von 139,26 Mbit/s abgenommen wird. Von einer Taktversorgungseinheit werden alle benötigten Signale zur Steuerung des Busses und zur Abtastung des Videosignals erzeugt. Das Videosignal wird hier nach einer Tiefpaßfilterung mit einem 9-Bit-Analog-Digitalwandler A/D geschlossen codiert und zusammen mit einem von einem Paritätsbit-Generator PB erzeugten Paritätsbit als 10-Bitwort in den elastischen Speicher im Takte der Abtastfrequenz, $F_A$, die vorteilhafterweise 13,5 MHz beträgt, eingelesen (SCHEIBE). Anstelle der geschlossenen Codierung kann selbstverständlich auch ein 135-Mbit/s-Bitstrom, der getrennt codiert ist, über Serien-Parallel-Wandler von 10 Bit Breite von dem elastischen Speicher ES aufgenommen werden.

Der elastische Speicher wird mit der (LESE) Taktfrequenz von 13,9264 MHz während der Spalten 2 bis 34 bzw. 34 bis 68 ausgelesen, wobei er über eine Lesesteuerung angesteuert wird. Mittels eines Phasenkomparators werden die Phasen von Schreibtakt und Lesetakt des elastischen Speichers miteinander verglichen, wobei bei Erreichen bzw. Unterschreiten eines vorgebbaren Phasendifferenzwertes der Lesetakt bei der nächstmöglichen Stopfgelegenheit angehalten wird und entsprechend signalisiert wird, indem von dem Phasenkomparator ein 10-Bit-Register SKB angesteuert wird, das daraufhin die Kennung auf den Bus ausgibt.

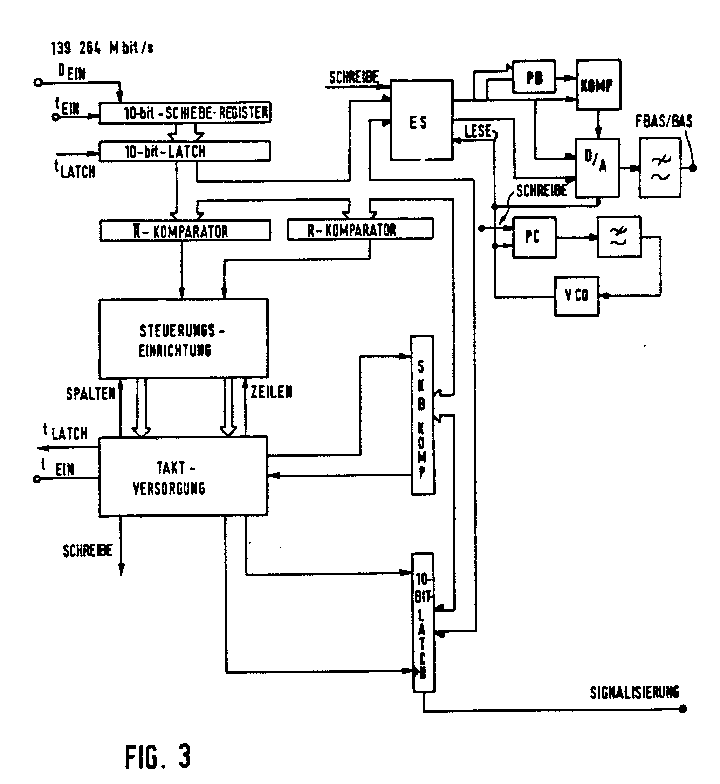

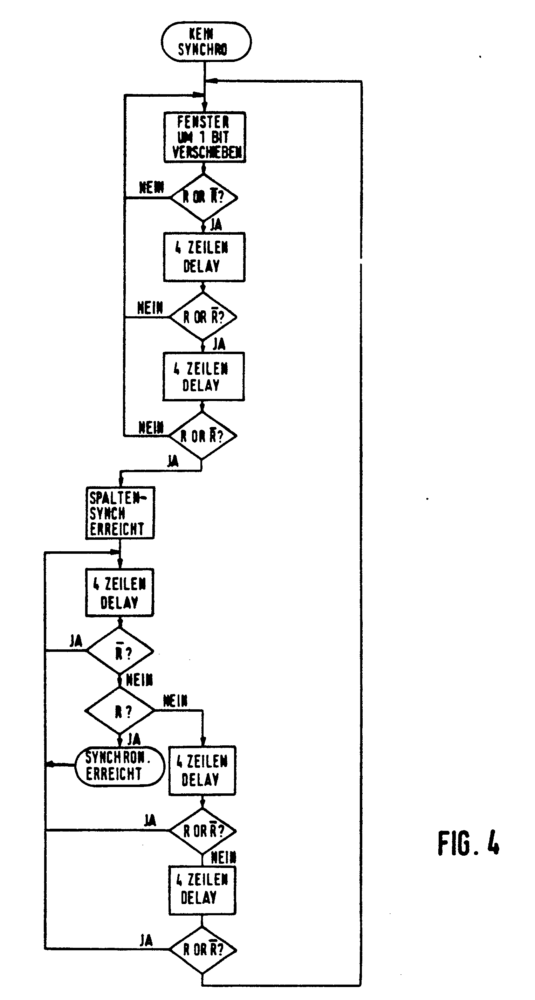

In Fig. 3 ist der dem Synchronmultiplexer nach Fig. 2 entsprechende Synchron-Demultiplexer auf der Empfangsseite dargestellt. Auch hier ist ein 10-Bit-Bus vorgesehen, an den eingangsseitig über ein 10-Bit-Latch ein 10-Bit-Schieberegister als Serienparallelwandler angeschlossen ist. Ausgangsseitig ist wiederum ein elastischer Speicher ES vorgesehen, ein 10-Bit-Schieberegister als Parallelserienwandler für die Signalisierung sowie Komparatoren für die Erkennung der Rahmensynchronisation R bzw. des invertierten Synchronisationswortes R̄. Weiterhin ist ausgangsseitig ein Komparator für die Erkennung der Stopfsignalisierung SKB angeschlossen. Eine Taktversorgungseinheit, die von dem Bittakt $T_{EIN}$ gesteuert wird, der vom eingehenden Multiplexstrom abgeleitet ist, erzeugt alle notwendigen Übernahmesignale zur Steuerung der an den 10-Bit-Bus angeschlossenen Eingangsbzw. Ausgangsregister. Zur Rahmensynchronisation ist eine Steuerungseinrichtung vorgesehen, die von den beiden Synchronisationskomparatoren angesteuert ist und die beispielsweise nach dem Synchronisationsalgorithmus nach Fig. 4 arbeitet. Der ankommende serielle Bitstrom von 139,264 Mbit/s wird während der Spalte 2 bis 34 bzw. 35 bis 68 als 10-Bit-wort mit dem (SCHREIB)Takt von 13,926 MHz in den elastischen Speicher ES eingeschrieben. Das Auslesen aus dem elastischen Speicher erfolgt mit Hilfe eines (LESE)Taktes, der dem mittleren Schreibetakt entspricht und durch einen Phasenregelkreis PC, VCO erzeugt wird. Das aus dem elastischen Speicher ausgelesene 10-Bitwort wird einem Digital-Analog-Wandler zugeführt, der von einer Fehlerverdeckungseinheit angesteuert wird, die aus einem weiteren Komparator und einer Paritätsbiterzeugung PB besteht, wobei der Komparator das durch den Paritätsbit-Generator erzeugte Paritätsbit mit dem im ausgelesenen Wort mitgelieferten Paritätsbit vergleicht. Im Nichtübereinstimmungsfall wird der mit dem Lesetakt getaktete Digital-Analog-Wandler D/A angehalten. Am Ausgang des Digital-Analog-Wandlers ist ein Tiefpaß angeschlossen, dem das übertragene Videosignal entnehmbar ist.

Das in Figur 4 gezeigte Ablaufdiagramm für einen möglichen Algorithmus zur Rahmensynchronisation sieht eine 10-Bit Verschiebung um jeweils 1 Bit vor, so lange keine Übereinstimmung des empfangenen Wortes mit einem der Synchronisationsworte besteht. Sobald eine Übereinstimmung gefunden wurde, wird nach 4 Zeilen überprüft, ob eine weitere Übereinstimmung vorherrscht. Im Falle einer dreimaligen Übereinstimmung nacheinander wird eine Spaltensynchronisation erkannt. Anschließend erfolgt die Zeilensynchronisation, indem nach dem ersten Synchronisationswort, das den Rahmen einleitet, abgefragt wird. Falls dreimal hintereinander eines der Synchronisationsworte nicht gefunden bzw. nicht erkannt wurde, wird auf Nichtsynchronisation erkannt und ein neuer Synchronisationsvorgang eingeleitet.

**Patentansprüche**

1. System zur digitalen Übertragung von Video- und/oder Bildfernsprech(BiFe)signalen mit der Bitrate eines PCM-Quartärsystems von 139,264 MBit/s gemäß CCITT G 703.9, wobei das analoge Video- bzw. BiFe-Signal auf eine Bitrate von 135 MBit/s digital codiert wird, wobei auf der Sendeseite ein Multiplexer (Sync-Mux) vorgesehen ist, durch den das codierte Video- bzw. BiFe-Signal, dessen Bitrate mittels Stopftechnik auf ein ganzes Vielfaches von 64 kBit/s gebracht ist, zusammen mit Synchronisierungssignalen (Syn), mit Signalisierungs(Sign)- und mit zusätzlichen Schmalbandsignalen und gegebenenfalls auch mit Stopfsignalen für diese zusätzlichen Schmalbandsignale jeweils der Bitrate von 64 kBit/s oder ganzen Vielfachen davon zu einem Multiplexsignal der Bitrate von 139,264 MBit/s synchron gebündelt wird und wobei auf der Empfangsseite eine Demultiplexeinrichtung (Sync-Demux) vorgesehen ist, durch die das Multiplexsignal in entsprechend umgekehrter Weise wieder in die einzelnen Signale zerlegt wird, dadurch gekennzeichnet, daß das vom Multiplexer (Sync-Mux) gebildete und vom Demultiplexer (Sync-Demux) empfangene Multiplexsignal einen Rahmen mit 2176 Zeitschlitzen aufweist, wobei jeder Zeitschlitz aus 10 Bit besteht.

2. System nach Anspruch 1, dadurch gekennzeichnet, daß der Rahmen in 32 Zeilen und 68 Spalten aufgeteilt ist, wobei jeder Zeitschlitz erstens durch seine Zeilen- und zweitens durch seine Spaltennummer (Z, S) gekennzeichnet ist und wobei die Übertragung zeilenweise seriell erfolgt.

3. System nach Anspruch 2, dadurch gekennzeichnet, daß die Zeitschlitze einer Spalte (35) zur Übertragung eines 2,048 MBit/s-Bitstroms und die Zeitschlitze einer um 34 Spalten versetzten Spalte (1) zur Übertragung eines 1,024 MBit/s-Bitstroms und von Synchronisierung-, Signalisierung- und gegebenenfalls Stopfsignalen vorgesehen sind.

4. System nach einem der vorhergehenden Ansprüche, dadurch gekennzeichnet, daß zur Synchronisation äquidistant im Rahmen verteilte, jeweils ein Synchronisationswort enthaltende Zeitschlitze vorgesehen sind, wobei einer (R) die invertierte Information der anderen (R̄) trägt.

5. System nach Anspruch 3, dadurch gekennzeichnet, daß als Rahmensynchronisationswort die Bitfolge 1111000100 (R) und die Bitfolge 0000111011 (R̄) gewählt werden.

6. System nach einem der Ansprüche 3, 4 oder 5, dadurch gekennzeichnet, daß der erste Zeitschlitz in jeder vierten Zeile, beginnend mit der ersten Zeile, das Rahmensynchronisationswort enthält, daß die Zeitschlitze der Spalte 35 für die Übertragung eines 2,048-Mbit/sec-Bitstroms (z.B. für PCM (P)) und bei im Plesiochronfalle notwendigem Stopfen der erste Zeitschlitz der siebten Zeile für die Stopfsignalisierung (PS) und der erste Zeitschlitz der neunzehnten Zeile als Überlauf (PÜ) vorgesehen sind, daß der erste Zeitschlitz der geraden Zeilen für die Übertragung eines 1,024-Mbit/sec-Bitstroms (z.B. für Stereoton (T)) und bei im Plesiochronfall notwendigen Stopfen der erste Zeitschlitz der dritten Zeile für Stopfsignalisierung (TS) und der erste Zeitschlitz der elften Zeile für Überlauf (TÜ) vorgesehen sind, daß der erste Zeitschlitz der fünfzehnten Zeile für die Übertragung eines Alarm- (A), Überwachungs- oder sonstiger Signale vorgesehen ist, daß der erste Zeitschlitz der dreiundzwanzigsten Zeile für die Übertragung eines Faksimilesignals (FX) vorgesehen ist, daß der Zeitschlitz der siebenundzwanzigsten Zeile für die Übertragung eines synchronen 64-kbit/sec-Bitstroms (F) oder eines asynchronen überabgetasteten Signals niedriger Bitrate vorgesehen ist, daß der erste Zeitschlitz der einunddreißigsten Zeile für die Übertragung eines Signalisierungssignals für die BiFe- bzw. Videozeichengabe (S) vorgesehen ist, und daß die Zeitschlitze der zweiten bis vierunddreißigsten und sechsunddreißigsten bis achtundsechzigsten Spalten für die Übertragung des BiFe- bzw. Videosignals vorgesehen sind, wobei der zweite Zeitschlitz der ersten Zeile und der sechsundvierzigste Zeitschlitz der elften Zeile die Stopfkennung (SKB) und der vierundzwanzigste Zeitschlitz der zweiundzwanzigsten Zeile die Stopfinformation (SB) enthalten.

7. System nach einem der vorhergehenden Ansprüche, dadurch gekennzeichnet, daß der Synchronmultiplexer (Sync-Mux) einen 10-Bit-Bus, an den jeweils über Tristate-Register ein elastischer Speicher (ES), dem das codierte Video- oder BiFe-Signal als 10-Bitwort parallel zugeführt wird, weitere Register zur Bereitstellung der Synchronisationswörter, der Stopfkennung und des Signalisierungswortes und als Ausgangsregister ein 10-Bit-Parallel-Serienwandler angeschlossen sind, und eine Taktversorgung enthält, durch welche die am Bus angeschlossenen Tristate-Register in der dem Rahmenaufbau entsprechenden Zeitschlitzreihenfolge angesteuert werden.

8. System nach einem der vorhergehenden Ansprüche, dadurch gekennzeichnnet, daß der Synchrondemultiplexer (Sync-Demux) einen 10-Bit-Bus, an den ein Serien-Parallel-Wandler als Eingangsregister, ein elastischer Speicher (ES), dem das codierte Video- oder BiFe-Signal als 10-Bitwort parallel entnommen wird, Komparatoren für Synchronisations- und Stopferkennung sowie ein Register für die Signalisierung angeschlossen sind, eine Taktversorgung und eine Steuerungseinrichtung für die Synchronisation enthält.

**Claims**

1. System for the digital transmission of video and/or videotelephone signals at the bit rate of a PCM quaternary system of 139.264 Mbit/s pursuant to CCITT G 703.9, with the analog video or videotelephone signal being digitally coded to a bit rate of 135 Mbit/s and a multiplexer (sync-mux) is provided at the transmitting end which bundles, in synchronism, the coded video or videotelephone signal whose bit rate has been brought, by means of the plugging technique, to a whole number multiple of 64 kbit/s, together with synchronizing signals (syn), signalling signals (sign) and additional narrowband signals and possibly also with justification signals for said additional narrowband signals, each at the bit rate of 64 kbit/s or a whole number multiple thereof, into a multiplex signal at the bit rate of 139.264 Mbit/s and a demultiplexing device (sync-demux) is provided at the receiving end which breaks up the multiplex signal into the individual signals in a correspondingly reversed manner, characterized in that the multiplex signal formed by the multiplexer (sync-mux) and received by the demultiplexer (sync-demux) has a frame having 2176 time slots, with each time slot comprising 10 bits.

2. System according to claim 1, characterized in that the frame is divided into 32 rows and 68 columns, with each time slot being identified, firstly, by its row number and, secondly, by its column number (Z, S), with the transmission being effected serially by rows.

3. System according to claim 2, characterized in that the time slots of a column (35) are provided for the transmission of a bit current of 2048 Mbit/s and the time slots of a column (1) offset by 34 columns is provided for the transmission of a bit current of 1024 Mbit/s and synchronizing, signalling and possibly justification signals.

4. System according to one of the preceding claims, characterized in that, for synchronization, time slots are provided which are equidistantly distributed in the frame and each contain one synchronizing word, with one time slot (R) carrying the inverted information of the other time slots (R̄).

5. System according to claim 3, characterized in that the bit sequence 1111000100 (R) and the bit sequence 0000111011 (R̄) are selected as the frame synchronizing word.

6. System according to one of claims 3, 4 or 5, characterized in that the first time slot in each fourth row, beginning with the first row, contains the frame synchronizing word, the time slots of column 35 are provided for the transmission of a 2048 Mbit/s bit current (e.g. for PCM (P)) and, in the plesiochronous case, where justification is necessary, the first time slot of the seventh row is provided for justification signalling (PS) and the first time slot of the nineteenth row is provided as overflow (PÜ); the first time slot of the even numbered rows is provided for the transmission of a 1024 Mbit/s bit stream (e.g. for stereo sound (T)) and, in the plesiochronous case, where justification is necessary, the first time slot of the third row is provided for justification signals (TS) and the first time slot of the eleventh row is provided for overflow (TÜ); the first time slot of the fifteenth row is provided for the transmission of an alarm signal (A), a monitoring signal or other signals; the first time slot of the twenty-third row is provided for the transmission of a facsimile signal (FX); the time slot of the twenty-seventh row is provided for the transmission of a synchronous 64 kbit/s bit current (F) or an asynchronous oversampled signal having a low bit rate; the first time slot of the thirty-first row is provided for the transmission of a signalling signal for generation of the videotelephone or video signal (S); and the time slots of the second to thirty-fourth and thirty-sixth to sixty-eighth columns are provided for the transmission of the videotelephone or video signal; the second time slot of the first row and the forty-sixth time slot of the eleventh row contains the justification identification (SKB) and the twenty-fourth time slot of the twenty-second row contains the justification information (SB).

7. System according to one of the preceding claims, characterized in that the synchronous multiplexer (sync-mux) includes a 10-bit bus to which is connected, by tristate registers, an elastic memory (ES) which receives the coded video or videotelephone signal in parallel as a 10-bit word, further registers for making available the synchronization words, the justification identification and the signalling word and an output register in the form of a 10-bit parallel/serial converter, the synchronous multiplexer further including a clock pulse generator with which the tristate registers connected to the bus are actuated in the time slot sequence corresponding to the frame structure.

8. System according to one of the preceding claims, characterized in that the synchronous demultiplexer (sync-demux) includes a 10-bit bus to which is connected a serial/parallel converter as the input register, an elastic memory (ES) which furnishes in parallel the coded video or videotelephone signal as a 10-bit word, comparators for detection of synchronization and justification as well as a signalling register, a clock pulse generator and a synchronization control device.

## Revendications

1. Système de transmission numérique de signaux vidéo et/ou visiophoniques avec le débit binaire d'un système MIC à quatre niveaux de 139,264 Mbit/s selon CCITT G 703.9, dans lequel le signal vidéo ou visiophonique analogique est codé numériquement à un débit binaire de 135 Mbit/s; un multiplexeur (Sync-Mux) est prévu du côté émission et concentre au synchronisme le signal vidéo ou visiophonique codé, dont le débit binaire est porté à un multiple entier de 64 kbit/s par bourrage, ainsi que des signaux de synchronisation (Syn), des signaux de signalisation, des signaux supplémentaires à bande étroite et le cas échéant des signaux de bourrage desdits signaux supplémentaires à bande étroite à débit binaire égal à 64 kbit/s ou à un multiple entier de cette valeur, en un signal multiplex à débit binaire de 139,264 Mbit/s; et un démultiplexeur (Sync-Demux) est prévu du côté réception et décompose de nouveau le signal multiplex en divers signaux, ledit système étant caractérisé en ce que le signal multiplex délivré par le multiplexeur (Sync-Mux) et reçu par le démultiplexeur (Sync-Demux) présente une trame de 2176 intervalles de temps, constitués chacun par 10 bits.

2. Système selon revendication 1, caractérisé en ce que la trame se divise en 32 lignes et 68 colonnes, chaque intervalle de temps étant identifié d'abord par son numéro de ligne, puis par son numéro de colonne (Z, S) et la transmission s'effectuant en série ligne par ligne.

3. Système selon revendication 2, caractérisé en ce que les intervalles de temps d'une colonne (35) sont prévus pour la transmission d'un débit binaire de 2,048 Mbit/s et les intervalles de temps d'une colonne (1) décalée de 34 colonnes pour la transmission d'un débit binaire de 1,024 Mbit/s et de signaux de synchronisation, signalisation et le cas échéant bourrage.

4. Système selon une quelconque des revendications 1 à 3, caractérisé en ce que des intervalles de temps équidistants dans la trame et contenant chacun un mot de synchronisation sont prévus pour la synchronisation, un d'eux (R) contenant l'information inversée de l'autre ($\bar{R}$).

5. Système selon revendication 3, caractérisé par le choix de la configuration binaire 1111000100 (R) et de la configuration binaire 0000111011 ($\bar{R}$) comme mot de synchronisation de trame.

6. Système selon une quelconque des revendications 3 à 5, caractérisé en ce que le premier intervalle de temps de chaque quatrième ligne, à partir de la première ligne, contient le mot de synchronisation de trame; les intervalles de temps de la colonne 35 sont prévus pour la transmission d'un débit binaire de 2,048 Mbit/s (pour MIC (P) par exemple), et, avec le bourrage nécessaire dans le cas de la plésiochronie, le premier intervalle de temps de la septième ligne est prévu pour la signalisation du bourrage (PS) et le premier intervalle de temps de la 19ème ligne pour le dépassement (PÜ); le premier intervalle de temps des lignes paires est prévu pour la transmission d'un débit binaire de 1,024 Mbit/s (pour le son stéréophonique (T) par exemple) et avec le bourrage nécessaire dans le cas de la plésiochronie, le premier intervalle de temps de la 3ème ligne est prévu pour la signalisation du bourrage (TS) et le premier intervalle de temps de la 11ème ligne pour le dépassement (TÜ); le premier intervalle de temps de la 15ème ligne est prévu pour la transmission d'un signal d'alarme (A), de contrôle ou autre; le premier intervalle de temps de la 23ème ligne est prévu pour la transmission d'un signal fac-similé (FX); l'intervalle de temps de la 27ème ligne est prévu pour la transmission d'un débit binaire synchrone de 64 kbit/s (F) ou d'un signal asynchrone surmodulé à débit binaire plus faible; le premier intervalle de temps de la 31ème ligne est prévu pour la transmission d'un signal de signalisation de l'émission de caractères visiophoniques ou vidéo (S); et les intervalles de temps des deuxième à 34ème et 36ème à 68ème colonnes sont prévus pour la transmission du signal visiophonique ou vidéo, le 2ème intervalle de temps de la première ligne et le 26ème intervalle de temps de la 11ème ligne contenant l'identificateur de bourrage (SKB) et le 24ème intervalle de temps de la 22ème ligne l'information de bourrage (SB).

7. Système selon une quelconque des revendications 1 à 6, caractérisé en ce que le multiplexeur synchrone (Sync-Mux) comprend un bus à 10 bits, auquel sont reliés par des registres à trois états une mémoire élastique (ES) à laquelle le signal vidéo ou visiophonique codé est appliqué en parallèle sous forme d'un mot de 10 bits, d'autres registres délivrant les mots de synchronisation, l'identificateur de bourrage et le mot de signalisation, et un convertisseur parallèle-série de 10 bits constituant le registre de sortie, ainsi qu'une horloge qui commande les registres à trois états reliés au bus selon la séquence des intervalles de temps correspondant à la structure de la trame.

8. Système selon une quelconque des revendications 1 à 7, caractérisé en ce que le démultiplexeur synchrone (Sync-Demux) comprend un bus à 10 bits auquel sont reliés un convertisseur série-parallèle constituant le registre d'entrée, une mémoire élastique (ES) dans laquelle le signal vidéo ou visiophonique codé est prélevé en parallèle sous forme d'un mot de 10 bits, des comparateurs d'identification de synchronisation et de bourrage, et un registre de signalisation, ainsi qu'une horloge et un dispositif de commande de synchronisation.

SPALTEN

```
F   = FREI
R   = RAHMEN-KENNUNGSWORT  =    1 1 1 1 0 0 0 1 0 0
R̄   =      "         "     =    0 0 0 0 1 1 1 0 1 1
T   = TON
TS  = TON - STOPF - SIGNALISIERUNG
ST  = TON - STOPF - ZEITSCHLITZ        ( POSITIV - STOPF )
SKB = STOPF - KENNUNG FÜR BILD
SB  = STOPF - ZEITSCHLITZ FÜR BILD
P   = PCM  2,048 M bit / sec  KANAL
SP  = STOPF - ZEITSCHLITZ FÜR PCM - KANAL ( POSITIV - STOPF )
PS  = PCM  2,048 STOPF SIGNALISIERUNG
TÜ  = TON - ÜBERLAUF - ZEITSCHLITZ ( NEGATIV - STOPF )
A   = ALARM - ZEITSCHLITZ
PÜ  = PCM - ÜBERLAUF - ZEITSCHLITZ   ( NEGATIV - STOPF )
FX  = FAKSIMILE
S   = SIGNALISIERUNGSKANAL
SB  = STOPF  ZEITSCHLITZ FÜR BILD
```

FIG. 1

0 103 076

FIG. 2

3

FIG. 3

FIG. 4